# EUROPEAN PATENT SPECIFICATION

(11) **EP 3 765 280 B1**
(45) Date of publication and mention of the grant of the patent: **09.08.2023**
(21) Application number: 19715578.1
(22) Date of filing: 08.03.2019
(51) Int. Cl.: A43B 3/36, B29D 35/12, A43B 1/00

(54) **STRUCTURE FOR LUMINOUS FOOTWEAR AND RESPECTIVE MAKING PROCESS**
STRUKTUR FÜR LEUCHTENDES SCHUHWERK UND ENTSPRECHENDES HERSTELLUNGSVERFAHREN
STRUCTURE POUR ARTICLE CHAUSSANT LUMINEUX ET PROCÉDÉ DE FABRICATION CORRESPONDANT

(30) Priority: 15.03.2018 IT 201800003598; 24.05.2018 IT 201800005656
(43) Date of publication of application: 20.01.2021
(73) Proprietor: Geox S.p.A., 31044 Montebelluna Località Biadene (Treviso) (IT)
(72) Inventor: MORETTI POLEGATO, Mario, 31044 Montebelluna (TV) (IT); GALLO, Giuliano, 31044 Montebelluna (TV) (IT)
(74) Representative: Biesse S.r.l.
(86) International application number: PCT/IB2019/051900
(87) International publication number: WO 2019/175728

(56) References cited:
- WO-A1-2014/209001
- US-A- 6 082 867
- US-A1- 2008 117 624
- US-A1- 2016 058 102
- US-B2- 9 848 668

## Description

### Field of the invention

In its most general aspect, the present invention concerns a structure for luminous footwear and, in particular, the invention concerns a structure of the aforesaid type comprising an outsole and a light emitting device combined with the outsole.

The invention further concerns a process for making the aforesaid structure and footwear comprising the aforesaid structure.

### State of the art

Luminous footwear used for increasing the visibility of those wearing them or for recreational purposes is known nowadays.

Footwear of the aforesaid type comprises one or more light emitting devices located at the outsole, at the upper or on the laces of the footwear.

If the event of devices arranged at the outsole and particularly inside the footwear, a semi-transparent outsole is provided with one or more housings delimited by walls and adapted to host the one or more light emitting devices which, generally, are manually inserted in the housings by a designated operator before the outsole is joined to the upper.

Document WO 2014/209001 A1 relates to a technique of generating light by coupling LED modules to an upper of a shoe or a shoe sole, in which the LED shoe comprises: a mounting pad which is coupled to a part of the area of the upper or the shoe sole and is provided with grooves and which is made from a transparent or translucent material; LED modules inserted and coupled to the grooves and having one or more LEDs sealed in order to generate light; a power supply means provided in the upper or the shoe sole so as to supply power to the LED modules; and a control module for controlling an operation or an operation mode of the LED modules.

Document US 6,082,867 A discloses a lighting arrangement comprising a three-dimensional electro-luminescent lighting element arranged to emit light in multiple directions without deforming the element, and including a center conductor and a coaxial outer conductor having wires that are stripped to form terminals of the lighting element, an electrical circuit connected to the terminals for supplying electrical power to the electro-luminescent lighting element at a frequency and voltage sufficient to cause the electro-luminescent lighting element to emit light, and an attachment structure for attaching the electro-luminescent lighting element to a main object in order to provide illumination for the main object over an arc angle of from 10° to 360°.

Document US 2008/117624 A1 discloses a lighted apparatus for use in apparel and footwear, comprising an exterior channel formed in the outer perimeter of the sole, one or more light sources mounted in the exterior channel, a protective covering surrounding the light source, one or more switches coupled to the light source, and one or more power sources operatively coupled to the one or more switches and the one or more light sources, wherein in apparel the one or more continuous light sources are removably attached to the garment.

Document US 9,848,668 B2 discloses a lighted footwear having a sole member; an illumination system positioned in the sole; and, an upper member providing an illumination path for receiving the light from the illumination system to illuminate at least a first portion of the upper.

The document US 2016/0058102 describes luminous footwear comprising an outsole and a light emitting device arranged internally at an edge of the outsole, which comprises a control device equipped with a battery, a strip of lights outside of the control device and electrically connected thereto, and a recharge/control cable with an interface to recharge the battery In detail, the strip of lights comprises a transparent casing, a flexible printed circuit FPC (Flexible Printed Circuit) comprising a plurality of conductive lines housed in the transparent casing, a plurality of luminous elements arranged on the FPC and electrically connected thereto, and a support also housed in the transparent casing and adapted to support and maintain the FPC in position inside the transparent casing.

The support, made of transparent PVC (polyvinylchloride), can be arranged next to the FPC on the side opposed to the luminous elements, or can be arranged next to the luminous elements on the side opposed to the FPC.

In any case, the support protects the FPC from undesired movements and deformations, or anyhow limits its movements and deformations so that to ensure the uniform illumination direction of the luminous elements.

In fact, it should be said that the FPC, as a result of its flexibility, could be subject to displacements, bending, deformations and therefore breakage, as a consequence of the intense stresses due to the weight and movements of the user of the footwear.

The presence of the support inside the transparent casing fixes and protects the FPC on one hand, but decreases the flexibility and increases the thickness of the light emitting device on the other, therefore, in order not to suffer from an excessive reduction in flexibility and to limit the thickness of the latter, the support must have a reduced thickness.

A support of reduced thickness unfortunately does not ensure total resistance against the bending and deformations that can derive from intense stresses due to the weight and movements of the user of the footwear, particularly when the light emitting device is arranged at the forefoot, where the most intense bending of the footwear occurs during its normal use.

In this regard, given that an FPC substantially extends along two dimensions, namely length and width, the third dimension of the thickness being very reduced with respect to the other two, it can be stated that, when spread out, an FPC generally has a sufficient flexibility with respect to an axis contained in the lying plane of the FPC and longitudinally extended thereon, while it has a very reduced, or even inexistent, flexibility with respect to an axis contained in the lying plane of the FPC and transversely extended thereon.

In practice, it can be stated that an FPC is flexible along one only direction.

Consequently, also in footwear having a light emitting device comprising a support of the FPC as described in the aforesaid document, the FPC itself can be subject to rapid breakage in case of damage to the support, since bending of the type considered above in the forefoot portion of footwear is very common.

### Summary of the Invention

The technical problem at the basis of the present invention was to provide luminous footwear having structural and functional characteristics so that to overcome one or more of the aforesaid drawbacks with reference to the known art.

According to the invention, the aforesaid problem is solved by a structure for luminous footwear according to claim 1.

In practice, according to the invention, a structure is provided for luminous footwear in which the aforesaid at least one luminous strip is not provided with a flexible printed circuit FPC and is also not provided with a specific support inside the casing since the aforesaid conductive wires, substantially being completely flexible, do not risk any breakage following intense stresses due to the weight or movements of the user of the footwear, not even whenever the light emitting device is positioned at the forefoot of the footwear.

Moreover, the luminous strip is particularly and advantageously flexible and thin without an additional support.

Preferably, the aforesaid first conductive means comprise at least one first insulating coating of the aforesaid conductive wires.

According to the invention, the aforesaid at least first insulating coating of the aforesaid conductive wires, which is preferably made of a polymeric material, can be provided separate, conductive wire by conductive wire, in practice to form a plurality of single electric cables separated and independent from one another, or the aforesaid at least first insulating coating can be provided in one piece for all conductive wires arranged side by side to one another, in practice to form a single substantially flattened electric cable comprising several conductive wires integral with one another.

Furthermore, according to the invention, single electric cables of the aforesaid type, arranged side by side to one another, can be constrained to one another along respective edges or adjacent generatrices of the aforesaid at least first insulating coating, for example by an adhesive means, to form, also in this case, a single substantially flattened electric cable comprising several conductive wires integral with one another, and also single electric cables of the aforesaid type, arranged side by side to one another, can be constrained to one another to form a single substantially flattened electric cable comprising several conductive wires integral with one another by means of a second insulating coating arranged above the first insulating coating, wherein the materials of the first insulating coating and of the second insulating coating can be equal to or different from one another, the second insulating coating also preferably being constituted of polymeric material.

In any case, according to the invention, the flexibility of the aforesaid first conductive means, and particularly of the aforesaid conductive wires, is anyhow preserved.

According to the invention, each of the light emitters of the aforesaid plurality of light emitters comprises at least one source of light and one microchip, wherein preferably the aforesaid at least one source of light is a LED (*Light Emitting Diode*).

The light emitters, each comprising a source of light and a microchip arranged along the aforesaid conductive wires, allow the conductive wires themselves to preserve the aforesaid flexibility, substantially for their entire length.

According to an embodiment of the invention, the aforesaid conductive wires inside the aforesaid casing are continuous, i.e. non-interrupted, from a first light emitter to a last light emitter of the aforesaid plurality of light emitters.

According to a further embodiment of the invention, at least one conductive wire of the aforesaid plurality of conductive wires is interrupted next to at least one light emitter, particularly interrupted between the inlet into, and the outlet from, the aforesaid at least one light emitter.

Still according to a further embodiment of the invention, at least one conductive wire of the aforesaid plurality of conductive wires is interrupted at each light emitter of the aforesaid plurality of light emitters, particularly interrupted between the inlet into, and the outlet from, each light emitter.

Preferably, the aforesaid conductive wires are three in number and are adapted to transmit an analog signal processed by the aforesaid control unit.

Preferably, the aforesaid light emitting device comprises at least one first electric connector interposed between the aforesaid control unit and the aforesaid at least one luminous strip at the aforesaid electric connection terminal, for the aforesaid removable electric connection.

Preferably, the aforesaid light emitting device comprises a connecting port electrically connected to the aforesaid control unit.

Preferably, the aforesaid light emitting device comprises a second electric connector interposed between the aforesaid control unit and the aforesaid connecting port, for a relative removable electric connection.

Preferably, the aforesaid connecting port is equipped with a control button.

Preferably, the aforesaid control unit comprises a switch and an impact sensor active on the aforesaid switch.

Preferably, the aforesaid outsole comprises at least one housing, the aforesaid casing engaging the aforesaid at least one housing.

Preferably, the aforesaid outsole and the aforesaid at least one luminous strip are constrained to one another at the aforesaid casing.

Preferably, the aforesaid outsole and the aforesaid at least one luminous strip are integral with one another, the aforesaid outsole being obtained by co-moulding with the aforesaid at least one luminous strip, particularly with the aforesaid casing.

According to the invention, the aforesaid light emitting device comprises a second luminous strip quite similar to the aforesaid first luminous strip, except in that the first luminous strip and the second luminous strip are different in length.

Preferably, the aforesaid light emitting device comprises a third electric connector interposed between the aforesaid control unit and the aforesaid second luminous strip which, of the two luminous strips, preferably is the one with the shortest length, for a relative removable electric connection.

According to the invention, in the aforesaid structure, the aforesaid second luminous strip is arranged at a toe portion of the aforesaid outsole, and the aforesaid first luminous strip is arranged at a remaining portion of the aforesaid outsole, wherein the aforesaid first luminous strip and the aforesaid second luminous strip are spaced from one another by a predetermined length at two portions of the aforesaid outsole which are essentially opposed to one another.

Preferably, in the aforesaid structure, the aforesaid light emitting device comprises at least one operating light scheme comprising the following steps of:
- a) illuminating the aforesaid plurality of light emitters, wherein even light emitters of the plurality of light emitters are illuminated in a first color, and uneven light emitters of the plurality of light emitters are illuminated in a second color, wherein the aforesaid first color and the aforesaid second color are different from one another;
- b) turning off the aforesaid plurality of light emitters;
- c) repeating the aforesaid step a).

Preferably, the aforesaid step a) lasts for a time interval tₐ and the aforesaid step b) lasts for a time interval t_{b}, wherein t_{b}<tₐ, preferably wherein tₐ is equal to about 60 seconds and t_{b} is equal to about 50 milliseconds.

Preferably, the aforesaid light scheme comprises a step d) in which the aforesaid even light emitters and the aforesaid uneven light emitters alternately invert their respective colors among one another, in which the color inversion frequency between the light emitters decreases over time.

Preferably, the aforesaid step d) lasts for a time interval 2<t_{d}<10 seconds, preferably wherein 3<t_{d}<7 seconds.

Preferably, the aforesaid color inversion frequency among the light emitters has a maximum value of about 20 exchanges per second and a minimum value of about 2 exchanges per second.

Preferably, the aforesaid step d) interrupts the aforesaid step a) if, during the aforesaid time interval tₐ, the aforesaid light emitting device undergoes a stress or command, for example by means of the aforesaid impact sensor or the aforesaid control button.

Preferably, the aforesaid light scheme comprises a step e) before the aforesaid step d) and after the aforesaid stress or aforesaid command, wherein the aforesaid even light emitters and/or the aforesaid uneven light emitters change their respective color.

Preferably, the aforesaid light scheme comprises a step d') equal to the aforesaid step d) and which interrupts the aforesaid step d) if, during the aforesaid time interval t_{d}, the aforesaid light emitting device undergoes a stress or command, for example by means of the aforesaid impact sensor or the aforesaid control button.

According to the invention, the aforesaid problem is also solved by footwear comprising a footwear structure of the aforesaid type and an upper combined with the aforesaid structure.

According to the invention, the aforesaid problem is also solved by a process for making a footwear structure of the aforesaid type, comprising the steps of:
- providing at least one luminous strip of the aforesaid type, comprising:
   an at least partially transparent casing, a plurality of light emitters housed in the aforesaid casing, and first conductive means to electrically connect the aforesaid light emitters one to another, wherein the aforesaid first conductive means comprise a plurality of conductive wires (electric wires) at least partially housed in the aforesaid casing, and wherein the aforesaid first conductive means comprise an electric connection terminal of the aforesaid conductive wires accessible from the outside of the aforesaid casing,
- providing a mould comprising a first mould half and a second mould half, wherein the aforesaid mould comprises at least one cavity for making an outsole for footwear;
- positioning the aforesaid casing of the aforesaid at least one luminous strip in the aforesaid first mould half at the aforesaid at least one cavity;
- closing the aforesaid first mould half with the aforesaid second mould half;
- inserting a polymeric material into the aforesaid cavity of the aforesaid mould, thus making an at least partially transparent outsole constrained to the aforesaid casing;
- opening the aforesaid mould by separating the aforesaid first mould half and the aforesaid second mould half from one another;
- extracting the aforesaid outsole constrained to the aforesaid at least one luminous trip at the aforesaid casing;
- connecting the aforesaid at least one luminous strip to a control unit equipped with a battery, at the aforesaid electric connection terminal, thus obtaining the aforesaid structure.

According to the invention, preferred embodiments of the aforesaid process are obtained analogously to the preferred embodiments of the aforesaid structure described above, to which description reference is made.

### Brief description of the figures

Further characteristics and advantages of the invention will be better highlighted in the following detailed description of some preferred, but not exclusive, embodiments illustrated by way of example, and without limitations, with the aid of the accompanying drawings, in which:
- figure 1 schematically shows a footwear structure, comprising an outsole and a light emitting device combined with the outsole and comprising a luminous strip equipped with a transparent casing, according to the present invention;
- figure 2 shows a light emitting device of the structure of figure 1, separated from the aforesaid outsole;
- figure 3 schematically shows the structure of figure 1, in which the light emitting device comprises two luminous strips, according to an embodiment variation of the present invention;
- figure 4 shows a light emitting device of the structure of figure 3, separated from the outsole;
- figure 5 shows a particular of the luminous strip of the light emitting devices of figures 2 and 4, according to an embodiment of the invention;
- figure 6 shows a particular of the luminous strip of the light emitting devices of figures 2 and 4, according to an embodiment variation of the invention.

### Detailed description of the invention

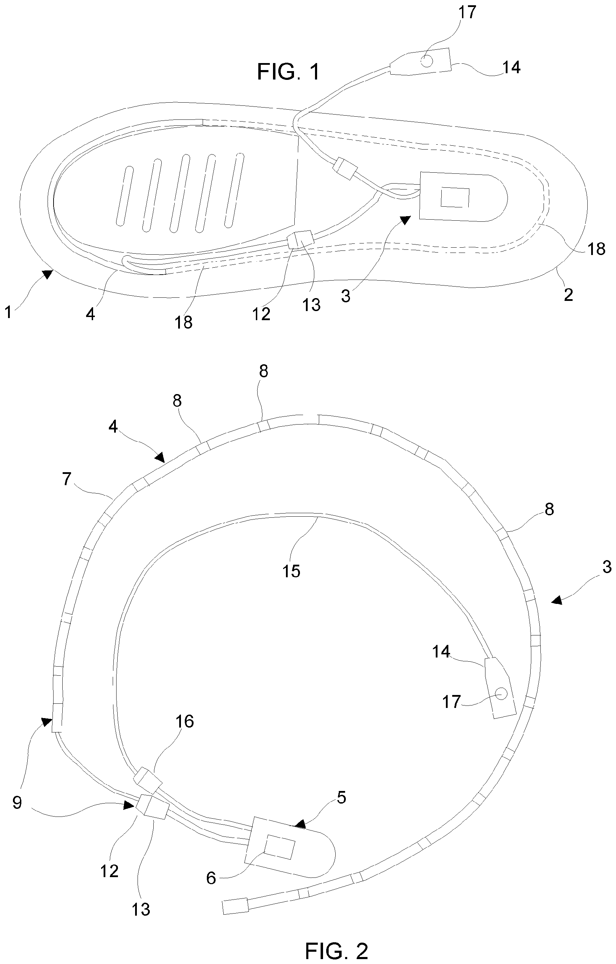

With reference to the examples of figures 1 and 2, 1 generally denotes a luminous footwear structure according to the present invention, comprising an outsole **2** at least partially transparent and a light emitting device, generally denoted by **3.**

In particular, the light emitting device **3** is combined with the outsole **2,** for example by adhesive means, or is constrained thereto and made integral by co-moulding as will become clearer hereinafter.

The light emitting device **3** comprises a luminous strip **4** and a control unit **5** equipped with a battery **6** and electrically connected to the luminous strip **4.**

The luminous strip **4** comprises an at least partially transparent casing **7,** a plurality of light emitters identified with **8** and housed in the casing **7,** and first conductive means **9** to electrically connect the light emitters **8** one to another.

The control unit **5,** which comprises electric circuits of known type, controls the plurality of light emitters **8,** managing its operations by emitting an electric signal, and, in particular, controls the color of the emitted light according to a predefined light scheme selected from a library of luminous light schemes.

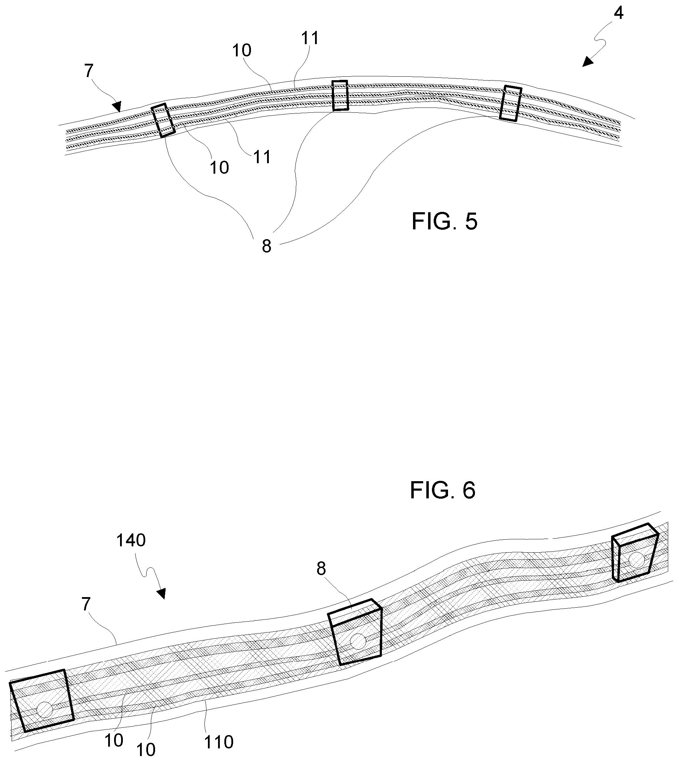

According to the invention, as also shown in the example of figure 5, in which a particular of the luminous strip of the light emitting device of figure 2 is shown, the first conductive means **9** comprise a plurality of conductive wires **10,** in practice preferably metal electric wires and, still preferably, a first insulating coating **11** of the conductive wires **10** to practically form a plurality of electric cables.

Moreover, according to the invention and still according to the examples of figures 1, 2 and 5, the conductive wires **10** are housed in the casing **7,** while the first conductive means **9** also comprise an electric connection terminal **12** for a removable electric connection between the conductive wires **10** and the control unit **5,** which is accessible from the outside of the casing **7.**

In practice, the electric connection terminal **12,** which is always accessible from the outside of the casing **7,** can be distal from the casing **7** and connected to the conductive wires **10** by a further length of wires, as shown in the example of figure 2.

In alternative, the electric connection terminal **12** can be proximal to the casing **7** and directly connected to the conductive wires **10** in proximity of an end of the casing **7,** or the electric connection terminal **12** can be distal from the casing **7** and directly connected to the conductive wires **10,** in the latter case, the conductive wires **10** having a length outside of the casing **7** that anyhow comprises the first insulating coating **11,** this embodiment not being in the figures shown.

It should also be mentioned that the conductive wires of the aforesaid type can be provided, so to speak, "naked" in the casing, which in this case, and anyhow preferably according to the present invention, is made of electrically insulting material in addition to being at least partially transparent.

In any case, according to the invention, what is relevant is that the first conductive means **9,** at least in the length inside of the casing **7,** are characterized by an almost total flexibility, that the casing **7** is sealed, also at the opposing ends so that make waterproof the luminous strip **4,** and that the light emitters **8** are electrically and removably connected to the control unit **5,** through the electric connection terminal **12** accessible from the outside of the casing **7.**

In this regard, it should be said that the light emitting device **3** preferably comprises a first electric connector **13** interposed between the control unit **5** and the luminous strip **4,** at the electric connection terminal **12,** for the relative removable electric connection between the luminous strip **4** and the control unit **5,** the possibility to provide a connection input made in one piece in the body of the control unit not being however excluded.

Furthermore, it should be said that the control unit **5** is also advantageously made waterproof by means of a coating in a liquid-proof material so that to protect its circuits and the battery **6** contained therein, a battery which is preferably rechargeable and which more preferably is a lithium battery.

According to the invention, each of the aforesaid light emitters **8** comprises at least one light source and one microchip combined with the light source, wherein preferably the at least one light source is a LED (Light Emitting Diode), while as far as the conductive wires **10** are concerned, it should be said that they preferably are three in number, and that they are adapted to transmit an analog signal processed by the control unit **5.**

Light emitters, each comprising a light source and a microchip arranged along the conductive wires **10** and connected thereto for example by soft soldering, advantageously allow the conductive wires themselves to preserve the aforesaid flexibility substantially for their entire length and particularly in the length inside of the casing **7.**

In this regard, it should be said that according to the invention and according to the example of figure 5, the conductive wires **10** inside the casing **7** are continuous, i.e. non-interrupted, from the first light emitter **8** to the last light emitter **8** of the plurality of light emitters, while the first insulating coating **11** of the conductive wires **10,** which is preferably made of a polymeric material, is provided separate, conductive wire **10** by conductive wire **10,** to form a plurality of single electric cables separated and independent from one another.

Therefore, according to the above, electric cable herein means a body with a core comprising at least one conductive wire as set forth above, and at least one coating layer of insulating material of the conductive wire.

Still according to the example of figure 2, it should be added that the light emitting device **3** preferably comprises a connecting port **14** electrically connected to the control unit **5,** which is preferably a USB port.

For the connection between the connecting port **14** and the control unit **5,** the light emitting device **3** comprises second conductive means **15,** advantageously an electric cable, and preferably also comprises a second electric connector **16** interposed between the control unit **5** and the second conductive means **15** for a relative removable electric connection.

The connecting port **14,** intended to be arranged for example at an upper to be combined with the outsole **2** of the present structure **1,** is adapted to recharge the battery **6** and to possibly connect the control unit **5** to an electronic processor for the programming of the library comprising the light schemes.

According to the example of figure 2, the light emitting device **3** further comprises a control button **17** mounted on board of the connecting port **14** to turn on/off the plurality of light emitters **8** and to select the light scheme from the library of preset light schemes.

In addition or in alternative to the control button, the light emitting device **3** can comprise a switch and an impact sensor active on the switch, which are not shown in the figures and arranged at the control unit **5.**

The impact sensor, so-called *knock*/*tap sensor* of known type, is adapted to control, by means of the switch, the turning on and off of the light emitting device, and/or the light scheme variation. The switch acts for example consequently to a close succession of two or three knocks ("*taps*") to which the luminous footwear is subject at the heel.

According to the above, in the embodiment according to the example of figure 5, when the light emitting device is turned on, the control unit almost simultaneously sends an operative signal to all light emitters, which almost simultaneously carry out the instruction itself.

As far as the control button **17** is concerned, it should be added that it is advantageously sensitive to time "t," as set forth here below.

The light emitting device is turned on by pressing on the button **17** for a short time t, above a first threshold value t1 (t>t1), in which preferably t1≤20 ms.

The light emitting device is turned off by pressing on the button **17** for a time t>t2, in which preferably t2≥1.5 seconds, when the light emitting device is turned on. The turning off of the light emitting device is preceded by a quick light scheme variation.

A light scheme can be varied by pressing on the button **17** for a time t which checks the condition t1<t<t2, when the light emitting device is turned on.

As far as the outsole **2** of the structure **1** is concerned, it should be said that it can be any outsole of an at least partially transparent material, for any footwear or footwear item.

According to the present invention and according to the example of figure 1, the outsole **2** preferably comprises a housing **18** which is engaged by the luminous strip **4,** particularly by its transparent casing.

Further housings can be provided in the outsole **2** to house the control unit **5,** the first electric connector **13** and the second electric connector **16.**

In particular, as far as the combination of the outsole **2** and the casing of the luminous strip **4,** at the housing **18,** are concerned, as mentioned above, it should be noted that a constraint, for example by means of a specific adhesive, can be made, or the outsole **2** and the casing of the luminous strip **4** can be made integral with one another by co-moulding.

With reference to the example of figure 6, an alternative embodiment of the present invention is shown, wherein parts structurally and functionally corresponding to the ones of figures 1, 2 and 5 shown above and to which description reference is made, preserve the same reference numbers.

In particular, the example of figure 6 shows an embodiment of an alternative luminous strip **140** with respect to the embodiment of the luminous strip shown in the example of figure 5, in which, according to the invention, a first insulating coating **110** is provided in one piece for all conductive wires **10** inside the casing **7.**

In practice, in the aforesaid alternative, the conductive wires **10** arranged side by side to one another are made integral with one another to form a single substantially flattened electric cable through a first monolithic insulating coating **110.**

According to this alternative embodiment of the present invention, preferably at least one conductive wire **10** of the plurality of conductive wires is interrupted next to at least one light emitter **8** of the plurality of light emitters, and is particularly interrupted between the inlet into, and the outlet from, the aforesaid at least one light emitter.

According to the invention and to the above, it should be said that more preferably at least one conductive wire **10** of the plurality of conductive wires is interrupted at each of the light emitters **8** of the plurality of light emitters, and is particularly interrupted between the inlet into, and the outlet from, each light emitter **8.**

Also in this case the light emitters **8** are advantageously combined with the conductive wires **10** by means of soft soldering.

In the conductive wires **10,** which comprise a so-called positive wire, a so-called negative wire and a so-called wire for transmitting the signal processed by the control unit, the aforesaid at least one wire interrupted inside the casing **7** is the one transmitting the signal.

The embodiment of the example in figure 6 is particularly advantageous both from a structural point of view and from a functional point of view.

Structurally, it should be said that a first monolithic insulating coating for all conductive wires, to form a flat cable, is particularly advantageous given it allows an easier manipulation of the first conductive means, in particular during the application step of the plurality of light emitters.

In fact, during the making of the light emitting device, a designated operator must only manipulate one flat cable instead of multiple cables, therefore being able to also make use of appropriate winding/unwinding machinery which speed up and simplify the making of the light emitting device. In practice, the relative mobility of a conductive wire with respect to the other conductive wires is significantly limited, reducing for example the risk of twisting the conductive wires, which could lead to the breakage or detachment of the light emitters.

Whereas functionally, it should be said that in the embodiment of the example of figure 6, the signal emitted by the control unit crosses the light emitters in succession from the first light emitter to the n-th light emitter of the plurality of light emitters. This way, the signal can contain a specific and different instruction for each light emitter. For example, when the signal enters the microchip of the first light emitter, this microchip makes the first light emitter execute the instruction assigned and suitably modifies the signal to indicate that the instruction for the light emitter was executed. The signal so modified is therefore sent to the microchip of the second light emitter where the sequence of operations is repeated up to the microchip of the n-th light emitter. This allows the control unit to control each light emitter independently and to transmit a signal containing n specific instructions for each n-th light emitter. In practice, each light emitter of the plurality of light emitters performs a different light scheme.

According to a further embodiment of the invention, single electric cables of the aforesaid type, arranged side by side to one another, can be constrained to one another along respective edges or adjacent generatrices of the first insulating coating also by an adhesive means, to form, also in this case, a single substantially flattened electric cable comprising several conductive wires integral with one another, this embodiment not being in the figures shown.

Still according to an embodiment variation of the invention, single electric cables of the aforesaid type, arranged side by side to one another, can be constrained to one another to form a single substantially flattened electric cable comprising several conductive wires integral with one another, by means of a second insulating coating arranged above the first insulating coating, wherein the materials of the first insulating coating and of the second insulating coating can be equal to or different from one another, the second insulating coating also preferably being constituted of polymeric material, this embodiment not being in the figures shown.

With regard to the aforesaid alternative embodiments of the present invention and with particular reference to the example of figure 6, it should be said that, unless otherwise specified, that which was previously shown with reference to figures 1, 2 and 5, to which description reference is made, is to be retained valid.

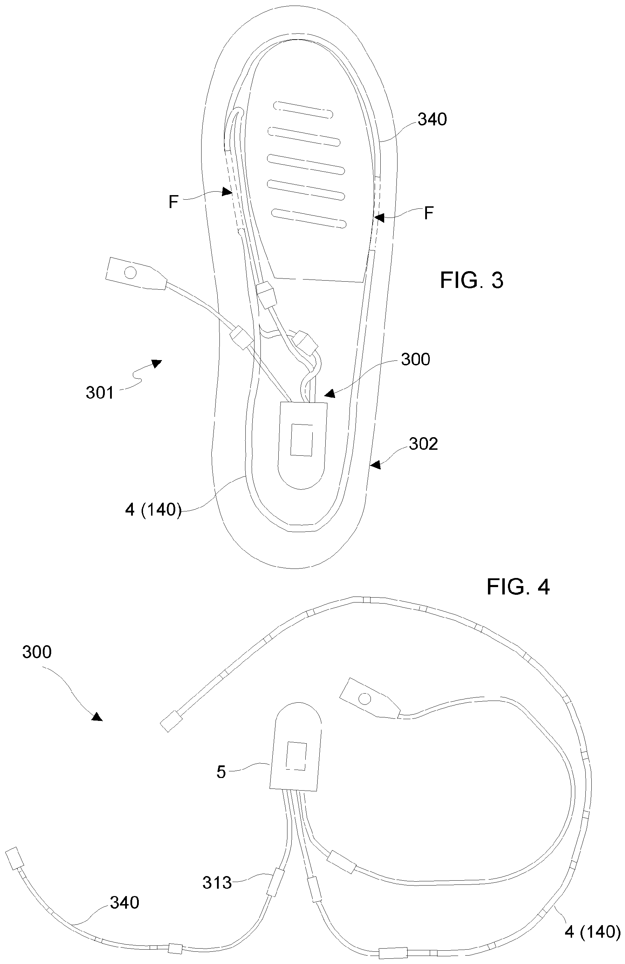

With reference to the example of figures 3 and 4, an alternative embodiment of the present invention is shown, wherein parts structurally and functionally corresponding to the ones of figures 1, 2, 5 and 6 described above preserve the same reference numbers.

In particular, the example of figure 4 shows a light emitting device **300** quite similar to the light emitting device **3** described above in the different embodiments shown, to which reference is made, which also comprises a second luminous strip **340** in addition to a first luminous strip.

Instead, the example of figure 3 shows a footwear structure **301** similar to the footwear structure **1** shown above in the different embodiments to which descriptions reference is made, which comprises an outsole **302** and the light emitting device **300.**

Therefore, in the light emitting device **300,** the first luminous strip and the second luminous strip can be equal to one another and correspond to the luminous strip **4** previously described, or they can be equal to one another and correspond to the luminous strip **140** previously described, or they can also be equal to one another and correspond to the other embodiments described for the luminous strip, or the first luminous strip and the second luminous strip **340** can also be different from one another and correspond one to one of the embodiments described above and the other to a different embodiment among the ones described above.

In the light emitting device **300,** the first luminous strip is therefore denoted by both the references used above, **4** and **140.**

In detail, according to the invention, the first luminous strip **4, (140)** and the second luminous strip **340** of the light emitting device **300** have different lengths from one another.

The light emitting device **300** therefore also preferably comprises a third electric connector **313** interposed between the control unit **5** and the second luminous strip **340** which, of the two luminous strips, preferably is the one with the shorter length for a relative removable electric connection.

According to the invention, the second luminous strip **340** is arranged at a toe portion of the outsole **302,** while the first luminous strip **4, (140)** is arranged at a remaining portion of the outsole **302,** wherein the first luminous strip **4, (140)** and the second luminous strip **340** are spaced from one another by a predetermined length at two portions of the outsole **302,** which are denoted by **F** and are essentially opposing one another.

This embodiment variation is particularly advantageous because by positioning the shorter luminous strip at the tip of the outsole, outside of the zone denoted by **F** which corresponds to the major bending zone of the outsole, and the other longer luminous strip in the remaining outsole portion, always outside of the major bending zone **F,** the exposure of the light emitting device to stresses that can damage it is further limited.

With regard to the aforesaid alternative embodiments of the present invention and with particular reference to the examples of figures 3 and 4, it should be said that, unless otherwise specified, that which was previously shown with reference to figures 1, 2, 5 and 6, to which description reference is made, is to be retained valid.

According to the above, the present invention also provides a process for making a footwear structure according to the various embodiments described above, comprising the steps of:
- providing a luminous strip as described above, wherein the luminous strip **4, 140** comprises:
   an at least partially transparent casing **7,** a plurality of light emitters **8** housed in the casing **7,** and first conductive means **9** to electrically connect the light emitters **8** one to another, wherein the first conductive means **9** comprise a plurality of conductive wires **10** (electric wires) at least partially housed in the casing **7,** and wherein the first conductive means **9** comprise an electric connection terminal **12** of the conductive wires **10** accessible from the outside of the casing **7,**
- providing a mould comprising a first mould half and a second mould half, wherein the mould comprises at least one cavity for making an outsole **2** for footwear, as described above;
- positioning the casing **7** of the luminous strip **4, 140** in the first mould half at the aforesaid cavity;
- closing the first mould half with the second mould half;
- inserting a polymeric material into the aforesaid cavity of the mould, thus making an at least partially transparent outsole **2** constrained to the casing **7**;
- opening the mould by separating the first mould half and the second mould half from one another;
- extracting the outsole **2** constrained to the luminous strip **4, 140** at the casing **7;**
- connecting the luminous strip **4, 140** to a control unit **5** equipped with a battery **6** and possibly with a connecting port **14,** as described above, at the electric connection terminal **12,** thus obtaining the structure **1.**

Preferably, the electric connection terminal **12** is connected to the control unit **5** by means of a first electric connector **13,** the possibility of providing a connection input made in one piece with the body of the control unit **5** not however being excluded.

According to the invention, preferred embodiments of the present process are obtained analogously to the preferred embodiments of the structure according to the invention and described above, to which description reference is made.

The process according to the present invention can therefore be implemented, *mutatis mutandis,* also to make the structure **301** described above, by operating in a similar way for the second luminous strip **340** as that which is reported for the first luminous strip **4, 140.**

According to the invention, a luminous footwear structure is therefore obtained, in which the outsole and the light emitting device form a single body, particularly in which the casing of the luminous strip of the light emitting device is adherent to the polymeric material of which the outsole is made.

Advantageously, this allows to significantly decrease, if not eliminate, the clearance between the casing and the walls of the outsole delimiting the housing obtained inside the outsole and engaged by the casing itself. Therefore, the relative movement between the luminous strip and the outsole, which could be the cause of further undesired stresses damaging for the light emitting device or of the undesired repositioning of the light emitting device inside the housing, is prevented.

Furthermore, the process according to the present invention allows to make outsoles already comprising a luminous strip as descried above, avoiding to have to insert the latter subsequently to the making of the outsole. This way, it is possible to create stock of outsoles well in advance with respect to the production of the relative footwear, thus allowing to install control units of the type considered above only in the final steps of the making of the footwear.

Advantageously, this allows to install, for example, progressively more updated versions of the control unit, or to make footwear with a same outsole model, but with control units comprising different libraries of preset light schemes, intended for example for different markets.

This way, it is possible to accelerate the introduction of luminous footwear equipped with updated control units able to enhance the performance of the luminous strip in the best possible way, on the market.

Still, the positioning of the luminous strip in a mould half is operatively more simple with respect to the positioning inside a housing preformed in an outsole, given that in the latter case, the luminous strip must be inserted between the walls of the housing delimiting a narrow space, while by operating in a mould half this constraint is inexistent.

Still, as far as the light schemes are concerned, it should be said that according to the invention and regardless of the embodiments described above for the present footwear structure, a preferred light scheme comprises the following steps of:
- a) illuminating the aforesaid plurality of light emitters, wherein even light emitters of the plurality of light emitters are illuminated in a first color, and uneven light emitters of the plurality of light emitters are illuminated in a second color, wherein the first color and the second color are different from one another;
- b) turning off the plurality of light emitters;
- c) repeating the aforesaid step a).

Preferably, the aforesaid step a) lasts for a time interval tₐ and the aforesaid step b) lasts for a time interval t_{b}, wherein t_{b}<tₐ, preferably wherein tₐ is equal to about 60 seconds and t_{b} is equal to about 50 milliseconds.

Preferably, the aforesaid light scheme comprises a step d) in which the even light emitters and the uneven light emitters alternately invert their respective colors among one another, in which the color inversion frequency between the light emitters decreases over time.

Preferably, the aforesaid step d) lasts for a time interval 2<t_{d}<10 seconds, preferably wherein 3<t_{d}<7 seconds.

Preferably, the aforesaid color inversion frequency among the light emitters has a maximum value of about 20 exchanges per second and a minimum value of about 2 exchanges per second.

Preferably, the aforesaid step d) interrupts the aforesaid step a) if, during the time interval tₐ, the aforesaid light emitting device undergoes a stress or command, for example by means of the aforesaid impact sensor or the aforesaid control button.

Preferably, the aforesaid light scheme comprises a step e) before the aforesaid step d) and after the aforesaid stress or aforesaid command, wherein the aforesaid even light emitters and/or the aforesaid uneven light emitters change their respective color.

Preferably, the aforesaid light scheme comprises a step d') equal to the aforesaid step d) and which interrupts the aforesaid step d) if, during the time interval t_{d}, the aforesaid light emitting device undergoes a stress or command, for example by means of the aforesaid impact sensor or the aforesaid control button.

In practice, in the aforesaid preferred light scheme, at the beginning, the even light emitters (for example LEDs) emit "almost fixed" light, for example red, and the uneven light emitters (for example LEDs) emit an "almost fixed" light, for example green, i.e. that there is a shutdown of a duration of 50 milliseconds every 60 seconds.

Preferably furthermore, if the light emitting device undergoes a stress, the even and uneven light emitters alternatively invert the color among one another, i.e. "exchange" the color alternatively, first quickly with about 20 exchanges per second, and progressively slower, decreasing to about 2 exchanges per second, thus creating a sort of "rebound" effect that stops within a time interval preferably between 2 and 10 seconds, more preferably between 3 and 7 seconds, after which the even light emitters return to emit an almost fixed light, for example red, and the uneven ones return to emit an almost fixed light, for example green.

Still preferably, subsequently to the stress and before the color exchange, the even and/or uneven light emitters can assume a different color of light than the one assumed at the beginning.

Moreover, preferably, whenever the light emitting device undergoes a stress within the time interval in which the "rebound" is active, a new "rebound" will start.

According to the above, the present invention also provides footwear comprising the structure shown above in the different embodiments described, to which reference is made, and an upper combined with the structure, not shown in the examples of the figures.

The advantages of the present invention, already clear in the description set forth above, can be summarized by highlighting that a luminous footwear structure, comprising an outsole and a light emitting device with at least one luminous strip comprising a casing integral with the outsole, which is not provided with a flexible printed circuit FPC and which is also not provided with a specific support inside the casing, is provided, which therefore is particularly economic and at the same time robust and flexible as far as the luminous strip is concerned, as well as particularly easy to make.

In order to meet incidental and specific requirements, several variations and modifications could be made by a field technician to the illustrated and described embodiments of present invention, provided that all are included in the protection scope of the invention as defined by the following claims.

## Claims

1. Structure (1; 301) for luminous footwear, comprising:
an outsole (2; 302) at least partially transparent and a light emitting device (3; 300) combined with said outsole, wherein said light emitting device comprises:
at least one luminous strip (4; 140) comprising an at least partially transparent casing (7), one plurality of light emitters (8) housed in said casing, and first conductive means (9) to electrically connect said light emitters (8) one to another,
a control unit (5) equipped with a battery (6) electrically connected to said at least one luminous strip (4, 140),
wherein said first conductive means (9) comprise a plurality of conductive wires (10) at least partially housed in said casing, wherein said first conductive means (9) comprise an electric connection terminal (12) accessible from the outside of said casing for a removable electric connection between said conductive wires (10) and said control unit (5)
and **characterized in that** said light emitting device (300) comprises a second luminous strip (340), wherein said second luminous strip (340) has a length shorter than said first luminous strip (4; 140), wherein said second luminous strip (340) is arranged at a toe portion of said outsole (302) outside of a zone corresponding to the major bending zone of said outsole (302), and said first luminous strip (4, 140) is arranged at a remaining portion of said outsole (302), outside said zone corresponding to the major bending zone of said outsole (302), wherein said first luminous strip and said second luminous strip are spaced from one another by a predetermined length at two portions (F) of said outsole which are essentially opposing one another, wherein said two portions (F) define said zone corresponding to the major bending zone of said sole (302).

2. Structure according to claim 1, wherein said at least one luminous strip (4, 140) is not provided with a flexible printed circuit FPC, and wherein said at least one luminous strip (4, 140) is not provided with a suitable support inside said casing.

3. Structure according to claim 1 or 2, wherein said first conductive means (9) comprise at least one first insulating coating (11; 110) of said conductive wires.

4. Structure according to any one of the preceding claims, wherein each of said light emitters (8) comprises at least one light source and one microchip, wherein preferably said at least one light source is a LED (Light Emitting Diode).

5. Structure according to any one of the preceding claims, wherein said light emitting device (3; 300) comprises at least one first electric connector (13) interposed between said control unit (5) and said at least one luminous strip (4, 140) at said electric connection terminal (12) for said removable electric connection.

6. Structure according to any one of the preceding claims, wherein said light emitting device (3; 300) comprises a connecting port (14) electrically connected to said control unit (5), wherein preferably said light emitting device (3; 300) comprises a second electric connector (16) interposed between said control unit (5) and said connecting port (14), for a respective removable electric connection, wherein said light emitting device (3; 300) more preferably comprises a command button (17) housed in said connecting port (14).

7. Structure according to any one of the preceding claims, wherein said at least one first insulating coating (11) of said conductive wires (10) is made of a polymeric material and is separate, conductive wire (10) by conductive wire (10), to form a plurality of single electric cables separated and independent from one another.

8. Structure according to claim 7, wherein said conductive wires (10) inside said casing are continuous and non-interrupted from a first light emitter (8) to a last light emitter (8) of said plurality of light emitters.

9. Structure according to any one of claims 1-6, wherein said at least one first insulating coating (110) of said conductive wires (10) is made of a polymeric material and is made in one piece for all the conductive wires (10) of said plurality of conductive wires, to form a single flattened electric cable.

10. Structure according to claim 9, wherein at least one conductive wire (10) of said plurality of conductive wires (10) is interrupted next to at least one light emitter (8) of said plurality of light emitters (8), between the input into, and the output from, said at least one light emitter, wherein said at least one conductive wire (10) of said plurality of conductive wires (10) is preferably interrupted at each light emitter of said plurality of light emitters, between the input into, and the output from, each light emitter.

11. Structure according to any one of the preceding claims, wherein said outsole (2; 302) and said at least one luminous strip (4, 140) are constrained to one another at said casing (7), said outsole and said at least one luminous strip being obtained by co-moulding.

12. Structure according to any one of the preceding claims, wherein said light emitting device comprises at least one operating light scheme comprising the following steps of:
- a) illuminating said plurality of light emitters, wherein even light emitters of said plurality of light emitters are illuminated in a first color, and uneven light emitters of said plurality of light emitters are illuminated in a second color, wherein said first color and said second color are different from one another;
- b) turning off said plurality of light emitters;
- c) repeating said step a).

13. Structure according to claim 12, wherein said step a) lasts for a time interval tₐ and said step b) lasts for a time interval t_{b}, wherein t_{b}<tₐ, preferably wherein tₐ is equal to about 60 seconds and t_{b} is equal to about 50 milliseconds.

14. Structure according to claim 12 or 13, wherein said light scheme comprises a step d) in which said even light emitters and said uneven light emitters alternately invert their respective colors among one another, in which the color inversion frequency between said light emitters decreases over time.

15. Structure according to claim 14, wherein said step d) lasts for a time interval 2<t_{d}<10 seconds, preferably wherein 3<t_{d}<7 seconds.

16. Structure according to claim 14 or 15, wherein said color inversion frequency has a maximum value of about 20 exchanges per second and a minimum value of about 2 exchanges per second.

17. Structure according to any one of claims 14-16, wherein said step d) interrupts said step a) if said light emitting device undergoes a stress or command during said time interval tₐ.

18. Structure according to claim 17, wherein said light scheme comprises a step e) before said step d) and after said stress or said command, wherein said even light emitters and/or said uneven light emitters change their respective color.

19. Structure according to any one of claims 14-17, wherein said light scheme comprises a step d') equal to said step d) and which interrupts said step d) if said light emitting device undergoes a stress or command during said time interval t_{d}.

20. Footwear comprising a structure according to any one of the preceding claims and an upper combined with said structure.

21. Process for making a footwear structure according to any one of claims 1-19, comprising the steps of:
- providing at least one luminous strip (4; 140) comprising:
an at least partially transparent casing (7), a plurality of light emitters (8) housed in said casing, and first conductive means (9) to electrically connect said light emitters (8) one to another, wherein said first conductive means (9) comprise a plurality of conductive wires (10) at least partially housed in said casing, and wherein said first conductive means (9) comprise an electric connection terminal (12) accessible from the outside of said casing,
- providing a mould comprising a first mould half and a second mould half, wherein said mould comprises at least one cavity for making an outsole for footwear;
- positioning said casing (7) of said at least one luminous strip (4; 140) into said first mould half at said at least one cavity;
- closing said first mould half with said second mould half;
- inserting a polymeric material into said cavity of said mould, thus making an at least partially transparent outsole (2) constrained to said casing;
- opening said mould by separating said first mould half and said second mould half from one another;
- extracting said outsole (2) constrained to said at least one luminous strip (4; 140) at said casing;
- connecting said at least one luminous strip (4; 140) to a control unit (5) equipped with a battery (6) at said electric connection terminal (12), thus obtaining said structure (1).

## Patentansprüche

1. Struktur (1; 301) für leuchtendes Schuhwerk, umfassend:
eine zumindest teilweise transparente Laufsohle (2; 302) und eine mit der Außensohle kombinierte lichtemittierende Vorrichtung (3; 300), wobei die lichtemittierende Vorrichtung umfasst:
mindestens einen Leuchtstreifen (4; 140), der ein zumindest teilweise transparentes Gehäuse (7), eine Vielzahl von in dem Gehäuse untergebrachten Lichtemittern (8) und erste Leitermittel (9) zur elektrischen Verbindung der Lichtemitter (8) untereinander umfasst,
eine Steuereinheit (5), die mit einer Batterie (6) ausgestattet ist, welche elektrisch mit dem mindestens einen Leuchtstreifen (4, 140) verbunden ist, wobei
die ersten Leitermittel (9) eine Vielzahl von Leiterdrähten (10) umfassen, die zumindest teilweise in dem Gehäuse untergebracht sind, wobei die ersten Leitermittel (9) einen elektrischen Verbindungsanschluss (12) umfassen, der von der Außenseite des Gehäuses für eine lösbare elektrische Verbindung zwischen den Leiterdrähten (10) und der Steuereinheit (5) zugänglich ist, und **dadurch gekennzeichnet, dass** die lichtemittierende Vorrichtung (300) einen zweiten Leuchtstreifen (340) umfasst, wobei der zweite Leuchtstreifen (340) eine kürzere Länge als der erste Leuchtstreifen (4; 140) aufweist, wobei der zweite Leuchtstreifen (340) an einem Zehenabschnitt der Außensohle (302) außerhalb eines Bereichs angeordnet ist, der dem Hauptbiegebereich der Außensohle (302) entspricht, und der erste Leuchtstreifen (4, 140) an einem verbleibenden Abschnitt der Außensohle (302) außerhalb des Bereichs angeordnet ist, der dem Hauptbiegebereich der Außensohle (302) entspricht, wobei der erste Leuchtstreifen und der zweite Leuchtstreifen an zwei sich im Wesentlichen gegenüberliegenden Abschnitten (F) der Außensohle um eine vorbestimmte Länge voneinander beabstandet sind, wobei die beiden Abschnitte (F) den Bereich definieren, der dem Hauptbiegebereich der Sohle (302) entspricht.

2. Struktur nach Anspruch 1, wobei der mindestens eine Leuchtstreifen (4, 140) nicht mit einer flexiblen gedruckten Schaltung FPC versehen ist, und wobei der mindestens eine Leuchtstreifen (4, 140) nicht mit einer geeigneten Halterung innerhalb des Gehäuses versehen ist.

3. Struktur nach Anspruch 1 oder 2, wobei die ersten Leitermittel (9) mindestens eine erste isolierende Beschichtung (11; 110) der Leiterdrähte umfassen.

4. Struktur nach einem der vorhergehenden Ansprüche, wobei jeder der Lichtemitter (8) mindestens eine Lichtquelle und einen Mikrochip umfasst, wobei vorzugsweise die mindestens eine Lichtquelle eine LED (Light Emitting Diode) ist.

5. Struktur nach einem der vorangehenden Ansprüche, wobei die lichtemittierende Vorrichtung (3; 300) mindestens einen ersten elektrischen Stecker (13) aufweist, der zwischen der Steuereinheit (5) und dem mindestens einen Leuchtstreifen (4, 140) an dem elektrischen Verbindungsanschluss (12) für die lösbare elektrische Verbindung angeordnet ist.

6. Struktur nach einem der vorhergehenden Ansprüche, wobei die lichtemittierende Vorrichtung (3; 300) einen Verbindungsanschluss (14) umfasst, der elektrisch mit der Steuereinheit (5) verbunden ist, wobei vorzugsweise die lichtemittierende Vorrichtung (3; 300) einen zweiten elektrischen Stecker (16) umfasst, der zwischen der Steuereinheit (5) und dem Verbindungsanschluss (14) angeordnet ist, zur Herstellung einer jeweiligen lösbaren elektrischen Verbindung, wobei die lichtemittierende Vorrichtung (3; 300) weiter vorzugsweise einen Steuerknopf (17) umfasst, der in dem Verbindungsanschluss (14) angeordnet ist.

7. Struktur nach einem der vorhergehenden Ansprüche, wobei die mindestens eine erste isolierende Beschichtung (11) der Leiterdrähte (10) aus einem polymeren Material besteht und Leiterdraht (10) für Leiterdraht (10) getrennt ausgebildet ist, um eine Vielzahl von einzelnen elektrischen Kabeln zu bilden, die getrennt und unabhängig voneinander sind.

8. Struktur nach Anspruch 7, wobei die Leiterdrähte (10) innerhalb des Gehäuses von einem ersten Lichtemitter (8) bis zu einem letzten Lichtemitter (8) der Vielzahl von Lichtemittern durchgehend und ohne Unterbrechung ausgebildet sind.

9. Struktur nach einem der Ansprüche 1 bis 6, wobei die mindestens eine erste isolierende Beschichtung (110) der Leiterdrähte (10) aus einem polymeren Material besteht und für sämtliche Leiterdrähte (10) der Vielzahl von Leiterdrähten einstückig ausgebildet ist, um ein einziges abgeflachtes elektrisches Kabel zu bilden.

10. Struktur nach Anspruch 9, wobei mindestens ein Leiterdraht (10) der Vielzahl von Leiterdrähten (10) im Bereich von mindestens einem Lichtemitter (8) der Vielzahl von Lichtemittern (8) zwischen dem Eingang in/dem Ausgang aus dem mindestens einen Lichtemitter unterbrochen ist, wobei der mindestens eine Leiterdraht (10) der Vielzahl von Leiterdrähten (10) im Bereich jedes Lichtemitters der Vielzahl von Lichtemittern zwischen dem Eingang in/dem Ausgang aus jedem Lichtemitter vorzugsweise unterbrochen ist.

11. Struktur nach einem der vorhergehenden Ansprüche, wobei die Außensohle (2; 302) und der mindestens eine Leuchtstreifen (4, 140) an dem Gehäuse (7) aneinander befestigt sind, wobei die Außensohle und der mindestens eine Leuchtstreifen durch Co-Molding erhalten werden.

12. Struktur nach einem der vorhergehenden Ansprüche, wobei die lichtemittierende Vorrichtung mindestens ein Betriebslichtschema umfasst, das folgende Schritte umfasst:
- a) Beleuchten der Vielzahl von Lichtemittern, wobei gerade Lichtemitter der Vielzahl von Lichtemittern in einer ersten Farbe beleuchtet werden und ungerade Lichtemitter der Vielzahl von Lichtemittern in einer zweiten Farbe beleuchtet werden, wobei die erste Farbe und die zweite Farbe voneinander verschieden sind;
- b) Ausschalten der Vielzahl von Lichtemittern;
- c) Wiederholen des Schritts a).

13. Struktur nach Anspruch 12, wobei der Schritt a) für ein Zeitintervall tₐ dauert und der Schritt b) für ein Zeitintervall t_{b} dauert, wobei t_{b}<tₐ, vorzugsweise wobei tₐ etwa gleich 60 Sekunden und t_{b} etwa gleich 50 Millisekunden ist.

14. Struktur nach Anspruch 12 oder 13, wobei das Lichtschema einen Schritt d) umfasst, in dem die geraden Lichtemitter und die ungeraden Lichtemitter abwechselnd ihre jeweiligen Farben untereinander wechseln, wobei die Farbwechselfrequenz zwischen den Lichtemittern mit der Zeit abnimmt.

15. Struktur nach Anspruch 14, wobei der Schritt d) für ein Zeitintervall von 2<t_{d}<10 Sekunden dauert, vorzugsweise wobei 3<t_{d}<7 Sekunden ist.

16. Struktur nach Anspruch 14 oder 15, wobei die Farbwechselfrequenz einen Maximalwert von etwa 20 Wechseln pro Sekunde und einen Minimalwert von etwa 2 Wechseln pro Sekunde aufweist.

17. Struktur nach einem der Ansprüche 14-16, wobei der Schritt d) den Schritt a) unterbricht, wenn die lichtemittierende Vorrichtung während des Zeitintervalls tₐ eine Beanspruchung oder einen Steuerbefehl erfährt.

18. Struktur nach Anspruch 17, wobei das Lichtschema einen Schritt e) vor dem Schritt d) und nach der Beanspruchung oder dem Steuerbefehl umfasst, wobei die geraden Lichtemitter und/oder die ungeraden Lichtemitter ihre jeweilige Farbe ändern.

19. Struktur nach einem der Ansprüche 14-17, wobei das Lichtschema einen Schritt d') umfasst, der gleich dem Schritt d) ist und der den Schritt d) unterbricht, wenn die lichtemittierende Vorrichtung während des Zeitintervalls t_{d} eine Beanspruchung oder einen Steuerbefehl erfährt.

20. Schuhwerk mit einer Struktur nach einem der vorhergehenden Ansprüche und einem mit dieser Struktur kombinierten Oberteil.

21. Verfahren zur Herstellung einer Schuhwerkstruktur nach einem der Ansprüche 1-19, umfassend folgende Schritte:
- Bereitstellen mindestens eines Leuchtstreifens (4; 140), umfassend:
ein zumindest teilweise transparentes Gehäuse (7), eine Vielzahl von Lichtemittern (8), die in dem Gehäuse untergebracht sind, und erste Leitermittel (9) zur elektrischen Verbindung der Lichtemitter (8) untereinander, wobei die ersten Leitermittel (9) eine Vielzahl von Leiterdrähten (10) umfassen, die zumindest teilweise in dem Gehäuse untergebracht sind, und wobei die ersten Leitermittel (9) einen elektrischen Verbindungsanschluss (12) umfassen, der von der Außenseite des Gehäuses zugänglich ist,
- Bereitstellen einer Form, die eine erste Formhälfte und eine zweite Formhälfte umfasst, wobei die Form mindestens einen Hohlraum zur Herstellung einer Außensohle für Schuhwerk umfasst;
- Positionieren des Gehäuses (7) des mindestens einen Leuchtstreifens (4; 140) in der ersten Formhälfte in dem mindestens einen Hohlraum;
- Schließen der ersten Formhälfte mit der zweiten Formhälfte;
- Einbringen eines Polymermaterials in den Formhohlraum, um dadurch eine zumindest teilweise transparente Außensohle (2) herzustellen, die an das Gehäuse gebunden ist;
- Öffnen der Form durch Trennen der ersten Formhälfte von der zweiten Formhälfte;
- Entnehmen der Außensohle (2), die an dem mindestens einen Leuchtstreifen (4; 140) im Bereich des Gehäuses gebunden ist;
- Verbinden des mindestens einen Leuchtstreifens (4; 140) mit einer mit einer Batterie (6) ausgestatteten Steuereinheit (5) im Bereich des elektrischen Verbindungsanschlusses (12), um somit die Struktur (1) zu erhalten.

## Revendications

1. Structure (1 ; 301) pour chaussures lumineuses, comprenant:
une semelle externe (2;302) au moins partiellement transparente et un dispositif émetteur de lumière (3; 300) associé avec ladite semelle externe, dans laquelle ledit dispositif émetteur de lumière comprend:
au moins une bande lumineuse (4; 140) comprenant un boîtier au moins partiellement transparent (7), une pluralité d'émetteurs de lumière (8) logés dans ledit boîtier et premiers moyens conducteurs (9) pour connecter électriquement lesdits émetteurs de lumière (8) entre eux,
une unité de commande (5) pourvue d'une batterie (6) connectée électriquement à ladite au moins une bande lumineuse (4, 140), dans laquelle
lesdits premiers moyens conducteurs (9) comprennent une pluralité de fils conducteurs (10) au moins partiellement logés dans ledit boîtier, dans laquelle lesdits premiers moyens conducteurs (9) comprennent un terminal de connexion électrique (12) pouvant être accédé depuis l'extérieur dudit boîtier pour une connexion électrique amovible entre lesdits fils conducteurs (10) et ladite unité de commande (5) et **caractérisée en ce que** ledit dispositif émetteur de lumière (300) comprend une seconde bande lumineuse (340), dans laquelle ladite seconde bande lumineuse (340) présente une longueur inférieure à ladite première bande lumineuse (4; 140), dans laquelle ladite seconde bande lumineuse (340) est disposée en correspondance d'une portion de bout de ladite semelle externe (302) à l'extérieur d'une zone correspondant à la zone de flexion majeure de ladite semelle externe (302), et ladite première bande lumineuse (4, 140) est disposée en correspondance d'une portion restante de ladite semelle externe (302), à l'extérieur de ladite zone correspondant à la zone de flexion majeure de ladite semelle externe (302), dans laquelle ladite première bande lumineuse et ladite seconde bande lumineuse sont espacées entre elles d'une longueur prédéterminée en correspondance de deux portions (F) de ladite semelle externe qui sont essentiellement opposées entre elles, dans laquelle lesdites deux portions (F) définissent ladite zone correspondant à la zone de flexion majeur de ladite semelle (302).

2. Structure selon la revendication 1, dans laquelle ladite au moins une bande lumineuse (4, 140) n'est pas pourvue d'un circuit imprimé souple FPC, et dans laquelle ladite au moins une bande lumineuse (4, 140) n'est pas pourvue d'un support approprié à l'intérieur dudit boîtier.

3. Structure selon la revendication 1 ou 2, dans laquelle lesdits premiers moyens conducteurs (9) comprennent au moins un premier revêtement isolant (11 ; 110) desdits fils conducteurs.

4. Structure selon l'une quelconque des revendications précédentes, dans laquelle chacun de lesdits émetteurs de lumière (8) comprennent au moins une source de lumière et une micropuce, dans laquelle ladite au moins une source de lumière est une LED (Diode Électroluminescente).

5. Structure selon l'une quelconque des revendications précédentes, dans laquelle ledit dispositif émetteur de lumière (3; 300) comprend au moins une première connexion électrique (13) interposée entre ladite unité de commande (5) et ladite au moins une bande lumineuse (4, 140) en correspondance dudit terminal de connexion électrique (12) pour ladite connexion électrique amovible.

6. Structure selon l'une quelconque des revendications précédente, dans laquelle ledit dispositif émetteur de lumière (3; 300) comprend un port de connexion (14) connecté électriquement à ladite unité de commande (5), dans laquelle ledit dispositif émetteur de lumière (3; 300) comprend de préférence un second connecteur électrique (16) interposé entre ladite unité de commande (5) et ledit port de connexion (14), pour une connexion électrique amovible relative, dans laquelle ledit dispositif émetteur de lumière (3; 300) comprend encore plus préférablement un bouton de commande (17) logé dans ledit port de connexion (14).

7. Structure selon l'une quelconque des revendications précédentes, dans laquelle au moins un premier revêtement isolant (11) desdits fils conducteurs (10) est réalisé en un matériau polymère et est séparé, fil conducteur (10) par fil conducteur (10), de sorte à former une pluralité de câbles électrique séparés et indépendants entre eux.

8. Structure selon la revendication 7, dans laquelle lesdits fils conducteurs (10) à l'intérieur dudit boîtier sont continus et non interrompus depuis un premier émetteur de lumière (8) à un dernier émetteur de lumière (8) de ladite pluralité d'émetteurs de lumière.

9. Structure selon l'une quelconque des revendications 1-6, dans laquelle ledit au moins un revêtement isolant (110) desdits fils conducteurs (10) est réalisé en un matériau polymère et en une seule pièce pour tous les fils conducteurs (10) de ladite pluralité de fils conducteurs, de sorte à former un seul câble électrique aplati.

10. Structure selon la revendication 9, dans laquelle au moins un fil conducteur (10) de ladite pluralité de fils conducteurs (10) est interrompu à côté d'au moins un émetteur de lumière (8) de ladite pluralité d'émetteurs de lumière (8), entre l'entrée dans et la sortie dudit au moins un émetteur de lumière, dans laquelle ledit au moins un fil conducteur (10) de ladite pluralité de fils conducteurs (10) est de préférence interrompu en correspondance de chaque émetteur de lumière de ladite pluralité d'émetteurs de lumière, entre l'entrée dans et la sortie de chaque émetteur de lumière.

11. Structure selon l'une quelconque des revendications précédentes, dans laquelle ladite semelle externe (2; 302) et ladite au moins une bande lumineuse (4, 140) sont contraintes entre elles en correspondance dudit boîtier (7), ladite semelle externe et ladite au moins une bande lumineuse étant obtenues par co-moulage.

12. Structure selon l'une quelconque des revendications précédentes, dans laquelle ledit dispositif émetteur de lumière comprend au moins un schéma lumineux fonctionnel comprenant les étapes suivantes de:
- a) illuminer ladite pluralité d'émetteurs de lumière, dans laquelle émetteurs de lumière pairs de ladite pluralité d'émetteurs de lumière sont illuminés d'une première couleur et émetteurs de lumière impairs sont illuminés d'une seconde couleur, dans laquelle ladite première couleur et ladite seconde couleur sont différentes entre elles;
- b) éteindre ladite pluralité d'émetteurs de lumière;
- c) répéter ladite étape a).

13. Structure selon la revendication 12, dans laquelle ladite étape a) dure un intervalle de temps tₐ et ladite étape b) dure un intervalle de temps t_{b}, dans laquelle t_{b}<tₐ, dans laquelle tₐ est de préférence égal à environ 60 secondes et t_{b} est égal à environ 50 millisecondes.

14. Structure selon la revendication 12 ou 13, dans laquelle ledit schéma lumineux comprend une étape d) dans laquelle lesdits émetteurs de lumière pairs et lesdits émetteurs de lumière impairs inversent alternativement leurs couleurs relatives entre elles, dans laquelle la fréquence d'inversion de couleur entre lesdits émetteurs de lumière diminue dans le temps.

15. Structure selon la revendication 14, dans laquelle l'étape d) dure un intervalle de temps 2<t_{d}<10 secondes, de préférence dans lequel 3<t_{d}<7 secondes.

16. Structure selon la revendication 14 ou 15, dans laquelle ladite fréquence d'inversion de couleur présente une valeur maximale d'environ 20 échanges par seconde et une valeur minimale d'environ 2 échanges par seconde.

17. Structure selon l'une quelconque des revendications 14-16, dans laquelle ladite étape d) interrompt ladite étape a) lorsque ledit dispositif émetteur de lumière subit une contrainte ou une commande durant ledit intervalle de temps tₐ.

18. Structure selon la revendication 17, dans laquelle ledit schéma lumineux comprend une étape e) avant ladite étape d) et après ladite contrainte ou ladite commande, dans laquelle lesdits émetteurs de lumière pairs et/ou lesdits émetteurs de lumière impairs changent leur couleur respective.

19. Structure selon l'une quelconque des revendications 14-17, dans laquelle ledit schéma lumineux comprend une étape d') égale à l'étape d) et qui interrompt ladite étape d) lorsque ledit dispositif émetteur de lumière subit une contrainte ou une commande durant ledit intervalle de temps t_{d}.

20. Chaussure comprenant une structure selon l'une quelconque des revendications précédentes et une tige associée avec ladite structure.

21. Procédé de fabrication d'une structure de chaussures selon l'une quelconque des revendications 1-19, comprenant les étapes de:
- fournir au moins une bande lumineuse (4; 140) comprenant:
un boîtier au moins partiellement transparent (7), une pluralité d'émetteurs de lumière (8) logés dans ledit boîtier, et premiers moyens conducteurs (9) pour connecter électriquement lesdits émetteurs de lumière (8) entre eux, dans laquelle lesdits premiers moyens conducteurs (9) comprennent une pluralité de fils conducteurs (10) au moins partiellement logés dans ledit boîtier, et dans laquelle lesdits premiers moyens conducteurs (9) comprennent un terminal de connexion électrique (12) pouvant être accédé depuis l'extérieur dudit boîtier,
- fournir un moule comprenant un premier demi-moule et un second demi-moule, dans laquelle ledit moule comprend au moins une cavité pour fabriquer une semelle externe pour chaussures;
- positionner ledit boîtier (7) de ladite au moins une bande lumineuse (4; 140) à l'intérieur dudit premier demi-moule en correspondance de ladite au moins une cavité;
- fermer ledit premier demi-moule avec ledit second demi-moule;
- insérer un matériau polymère à l'intérieur de ladite cavité dudit moule, réalisant ainsi une semelle externe au moins partiellement transparente (2) contrainte audit boîtier;
- ouvrir ledit moule en séparant ledit premier demi-moule et ledit second demi-moule l'un de l'autre;
- extraire ladite semelle externe (2) contrainte à ladite au moins une bande lumineuse (4; 140) en correspondance dudit boîtier;
- connecter ladite au moins une bande lumineuse (4; 140) à une unité de commande (5) pourvue d'une batterie (6) en correspondance dudit terminal de connexion électrique (12), obtenant ainsi ladite structure (1).
